# EUROPEAN PATENT SPECIFICATION

(11) **EP 0 689 524 B1**
(45) Date of publication and mention of the grant of the patent: **17.06.1998**
(21) Application number: 94909186.2
(22) Date of filing: 11.03.1994
(51) Int. Cl.: C04B 35/00, C04B 28/34

(54) **IMPROVEMENTS IN THE MANUFACTURE OF SHAPED REFRACTORY OBJECTS**
VERBESSERTE HERSTELLUNG VON GEFORMTEN FEUERFESTARTIKELN
AMELIORATIONS APPORTEES A LA FABRICATION D'OBJETS REFRACTAIRES DE FORME

(30) Priority: 16.03.1993 GB 9305346
(43) Date of publication of application: 03.01.1996
(73) Proprietor: Shaw, Richard Dudley, Downe Orpington Kent BR6 7JN (GB)
(72) Inventor: Shaw, Richard Dudley, Downe Orpington Kent BR6 7JN (GB)
(74) Representative: Smith, Norman Ian
(86) International application number: GB9400480
(87) International publication number: WO9421571

(56) References cited:
- DE-A- 3 131 434
- DE-A- 3 620 284
- FR-A- 2 041 320
- US-A- 3 525 632
- Ullmans Encyclopädie der Technischen Chemie, 3. Auflage, B.6; S. 236, 243

## Description

This invention relates to the manufacture of shaped refractory objects and is a development of the invention set out in EP-A-0,501,662. In accordance with this earlier European Application a slurry of basic refractory grains and a polyphosphate are set into a green shape, minerals being included in the dry mix which, when the slurry is set, and is being fired develop strengthening spinel linkages. These linkages are developed at a temperature below that at which the phosphate bonds tend to lose their strength.

Preferred procedures in accordance with EP-A-0,501,662 use a complex polyammonium phosphate either in liquid or initially solid form in an aqueous system with an appropriate refractory aggregate containing the spinel forming minerals, usually active alumina and magnesia. These polyammonium complexes are substantially neutral in aqueous systems and this was perceived to be a requirement to avoid rapid and uncontrolled reaction with the basic refractory which would arise with acid reagents.

In accordance with the present invention there is provided a method of manufacturing a refractory object which comprises the steps of casting an aqueous slurry comprising a refractory aggregate and magnesium orthophosphate and aluminium orthophosphate to set to a desired shape; characterised in that the set shape is fired and in that the molar ratio of the magnesium orthophosphate to said aluminium orthophosphate is 1:1.

As in our European Patent Application spinel linkages are developed during firing before the phosphate bonds lose their strength. The spinel is more effective formed out of solution than the solid as described in earlier EP-A-0,501,662.

In order to contain the magnesium and aluminium phosphate the solution has to be acidic. The binding liquid thus may contain an appropriate amount of phosphoric acid.

The magnesium orthophosphate and aluminium orthophosphate solutions are in a molar ratio to form a spinel so that the residue on firing develops the strong spinel bond.

In some circumstances it may be desired to increase the phosphate content and then a dry phosphate additive typically of aluminium tripolyphosphate and dimagnesium polyphosphate trihydrate is added again in molar ratios to result in a spinel bond.

The above ratios need not be precisely molar as a slight richness of the residue either in magnesium or alumina only results in a slightly reduced strength. All that is required is that the spinel is effectively formed.

It should be noted that the liquid phosphate mixture is still acid and thus may be reactive to a strongly basic refractory giving the possibility of excessively violent reaction which could be uncontrolled. However, spinels have been developed with a high alumina content with less free magnesia to react and these, being less strongly basic, are suitably employed in the systems of the present invention. An example of such a spinel is that sold by Steetley under the Trade Mark BRITMAG SPINEL 75.

The mixed binder in accordance with the invention has wider application than the setting of basic refractories as above. It may be used to set alumina silicates with a hydraulic alumina cement accelerator or more generally as a setting accelerator for alumina based hydraulic cements useful in refractory applications.

FR-A-2,041,320 discloses a heat-settable gunning composition to form a refractory coating for example on the inner surface of a fireplace. One composition comprises a refractory aggregate, as described mainly composed of silicon carbide, and a monophosphate which may be a mixture of aluminium and magnesium phosphates. Basic aggregates are not envisaged nor is the mandatory use of a mixture of the orthophosphates in a molar ratio to form a spinel.

The invention will now be described by way of example.

### Example 1

The improved binder in accordance with the present invention is designated from time to time hereinafter as P450 and is an aqueous solution of magnesium orthophosphate, aluminium orthophosphate and orthophosphoric acid. The solution has a pH value at 1% of 2.3. The molar ratio of the aluminium and magnesium phosphates results in a magnesium oxide/aluminium oxide residue on firing in the spinel ratio. P450 is chemically and physically stable and has a target analysis:-

| | |
|---|---|
| % MgO | 1.7 |
| % Al₂0₃ | 4.3 |
| % P₂0₅ | 28.6 |

equivalent to 9.3% Mg (H₂PO₄)₂, 26.8% Al(H₂PO₄)₃ and 6.2% free H₃PO₄.

A refractory mixture for use with P450 is as follows:-

| | | |
|---|---|---|
| Spinel 67 Steetley | 1/8 - 16 BSS | 55 parts x wgt. |
| Spinel 67 " | 16 x 30 | 10 parts x wgt. |
| Spinel 67 " | 30 x 52 | 7.5 parts x wgt. |
| Spinel 67 " | -200 mesh | 20 parts x wgt. |
| Spinel 75 | -200 mesh | 10 parts x wgt. |

The second column above and hereinafter is grain size.

The liquid is added to the refractory mix at 65 cc per kg with between 10 to 22 cc of a water and soap solution.

In order to speed setting time the proportion of 200 mesh spinel, i.e. the active spinel, may be increased or alternatively accelerator powder added to a maximum 6% by weight. Typical setting times are between 10 minutes and 1 hour.

It appears that a mixture of the two acid phosphates act as a buffer to the reaction rate. That is to say that when mixed together the setting time is increased - i.e. the reaction rate decreases - to a slower time than either of the components individually. As previously stated each phosphate individually would have been regarded as excessively acidic to achieve a controlled setting time.

For example the mixture used above gives typically a setting time at 18°C of 12 minutes. An aluminium ortho phospate on its own gives a setting time under the same conditions of some 5-6 minutes and magnesium orthophosphate of some 7-8 minutes, both times being regarded as uncontrolled.

Because of this unexpected result the mixed phosphate may be used in mixtures of refractory grain of a substantially higher basicity. It has been further found that the mixed phosphate of the invention is no more reactive and much less sensitive to additions of reactive magnesia than the binders described in EP-A-0,501,662.

The mixed binder P450 may be used as a binder in an alumina silicate refractory system using hydraulically settable aluminous cement as the accelerator. This system is rendered basic by the cement. Thus:

### Example 2

| | | |
|---|---|---|
| Bauxite crushed and graded | -3+1 | 55 parts by wt. |
| Bauxite of approx. 70 Al₂0₃ | -1 | 20 parts by wt. |
| 20 Si0₂ | -200 | 20 parts by wt. |
| Alumina MA95 | | 5 parts by wt. |
| Calcium Aluminate cement (SECAR)70 | | 3 parts by wt. |

is mixed with P450 (60-70 ccs per kilo of mix). A controlled set occurs in 12 minutes at 15°C.

With the spinel or semi spinel system described in Example 1 the SECAR or similar cement can replace either magnesia or spinel or both. Indeed by adding P450 the hydraulic cements will set more rapidly. Thus considering a system containing calcium/alumina water and P450 there would be two reactions:-
1. Reaction of calcium aluminate cement to increase the pH and cause the P450 to set in 12 minutes.
2. Water in the binder causing the cement to set hydraulically in about 2 hours or more.

This is a means of causing a hydraulically castable system to set quickly without detriment to the ultimate properties of the castable. This hydraulically set system would have the previously described spinel derived strength during firing.

It should be mentioned that cement castables may have setting times accelerated also by the phosphates of aluminium or magnesium used separately.

## Claims

1. A method of manufacturing a refractory object which comprises the steps of casting an aqueous slurry comprising a refractory aggregate and magnesium orthophosphate and aluminium orthophosphate to set to a desired shape; characterised in that the set shape is fired, and in that the molar ratio of the magnesium orthophosphate to said aluminium orthophosphate is 1:1.

2. A method according to Claim 1, wherein the phosphate content is increased by the addition of a dry phosphate additive such as aluminium tripolyphosphate or dimagnesiumpolyphosphate trihydrate.

3. A method according to Claim 1 or Claim 2, wherein the refractory aggregate is alumina, magnesia or spinel based.

4. A method according to Claim 1 or Claim 2, wherein the refractory aggregate is a hydraulically settable calcium/alumina cement.

5. A method according to any of Claim 4 wherein the mixed orthophosphate is used to accelerate the hydraulic setting reaction.

## Patentansprüche

1. Verfahren zur Herstellung eines feuerfesten Gegenstandes mit den Verfahrensschritten des Gießens einer wässrigen Schlämme mit einem feuerfesten Bestandteil und Magnesiumorthophosphat sowie Aluminiumorthophosphat in einer Form zum Erhalt des Gegenstandes in der gewünschten Formgebung, **dadurch gekennzeichnet, daß** dieser Gegenstand, nachdem er in der gewünschten Form vorliegt, gebrannt wird und daß das Molverhältnis von Magnesiumorthosulphat zu Aluminiumorthosulphat 1:1 ist.

2. Verfahren nach Anspruch 1, bei dem der Phosphatgehalt durch die Zugabe eines trockenen Phosphatadditives wie Aluminiumtripolyphosphat oder Dimagnesiumpolyphosphattrihydrat erhöht ist.

3. Verfahren nach Anspruch 1 oder 2, bei dem der feuerfeste. Bestandteil als Grundlage Aluminiumoxid, Magnesiumoxid oder Spinell hat.

4. Verfahren nach Anspruch 1 oder 2, bei dem der feuerfeste Bestandteil ein hydraulisch härtendes Kalzium/Aluminiumoxid Bindemittel ist.

5. Verfahren nach Anspruch 4, bei dem Orthosulphat als Gemischbestandteil verwendet wird, um die hydraulische Härtereaktion zu beschleunigen.

## Revendications

1. Procédé de fabrication d'un objet réfractaire, qui comprend les phases consistant :
- à mouler une boue aqueuse comprenant un agrégat réfractaire, de l'orthophosphate de magnésium et de l'orthophosphate d'aluminium à durcir suivant une forme souhaitée,
caractérisé en ce que la forme durcie est cuite et en ce que le rapport molaire de l'orthophosphate de magnésium sur ledit orthophosphate d'aluminium est égal à 1:1.

2. Procédé selon la revendication 1, dans lequel la teneur en phosphate est augmentée en ajoutant un additif de phosphate sec tel qu'un tripolyphosphate d'aluminium ou un trihydrate de polyphosphate de dimagnésium.

3. Procédé selon la revendication 1 ou 2, dans lequel l'agrégat réfractaire est à base d'alumine, de magnésie ou de spinelle.

4. Procédé selon la revendication 1 ou 2, dans lequel l'agrégat réfractaire est un ciment de calcium/ alumine pouvant durcir hydrauliquement.

5. Procédé selon l'une quelconque des revendications 1 à 4, dans lequel l'orthophosphate mélangé est utilisé pour accélérer la réaction de prise hydraulique.
